Europäisches Patentamt

European Patent Office

Office européen des brevets

(19)

(11) Numéro de publication: **0 206 902**

**B1**

(12) **FASCICULE DE BREVET EUROPEEN**

(45) Date de publication du fascicule du brevet: **11.04.90**

(51) Int. Cl.⁵: **B 60 P 3/34**

(21) Numéro de dépôt: **86401257.0**

(22) Date de dépôt: **10.06.86**

(54) **Caravane rigide pliante à éléments d'aménagement intérieur associés au toit.**

(30) Priorité: **11.06.85 FR 8508797**

(43) Date de publication de la demande:
**30.12.86 Bulletin 86/52**

(45) Mention de la délivrance du brevet:
**11.04.90 Bulletin 90/15**

(84) Etats contractants désignés:
**BE DE FR GB IT NL**

(56) Documents cités:
**DE-A-2 835 166**
**FR-A-2 049 376**
**FR-A-2 256 055**
**FR-A-2 387 817**
**FR-A-2 459 741**
**FR-A-2 509 674**
**US-A-3 506 300**

(73) Titulaire: **S.A. RAPIDO CARAVANES**
**Route de Bretagne**
**F-53100 Mayenne (FR)**

(72) Inventeur: **Rousseau, Pierre**
**Résidence Gambetta**
**F-53100 Mayenne (FR)**

(74) Mandataire: **Martin, Jean-Jacques et al**
**Cabinet REGIMBEAU 26, Avenue Kléber**
**F-75116 Paris (FR)**

Courier Press, Leamington Spa, England.

## Description

L'invention concerne une caravane de type rigide et pliante, telle que défini dans le préambule de le revendication 1.

Lorsque la caravane est à l'état plié, les quatre panneaux supérieurs sont rabattus vers l'intérieur et le toit repose sur la caisse inférieure. Lorsque la caravane est à l'état déplié, les panneaux supérieurs prolongent les panneaux inférieurs et le toit repose sur les panneaux supérieurs. Le toit est associé en permanence à deux panneaux supérieurs opposés, notamment les panneaux supérieurs avant et arrière, par exemple par des rails de guidage solidaires du toit et coopérant avec des roulements associés aux coins supérieurs de ces panneaux supérieurs.

Les avantages de ce type de caravane sont multiples. En particulier, elles ont quasiment toutes les qualités de caravanes non pliantes lorsqu'elles sont dépliées et ont un encombrement réduit en hauteur lorsqu'elles sont pliées, ce qui permet notamment de les transporter et de les stocker plus facilement.

Cependant, le toit de telles caravanes connues, généralement réalisé en matière plastique par moulage, est un simple toit bombé de faible rigidité propre. Le seule présence de deux glissières ménagées le long des bords longitudinaux du toit ne peut écarter le risque de déformation du toit selon un vrillage du rectangle que forme la périphérie du toit et/ou selon un affaissement du toit dans la zone centrale de celui-ci.

On connaît par ailleurs des caravanes rigides pliantes dont le mode de pliage est différent de celui indiqué ci-dessus, et qui comportent des éléments d'aménagement intégrés au toit. De telles caravanes sont par exemple illustrées dans les documents FR—A—2 509 674 et FR—A—2 049 376. Dans toutes ces caravanes connues, les manoeuvres de pliage et de dépliage sont telles que le toit reste en permanence horizontal et sont effectuées par des mécanismes à treuils, palans ou similaires. En effet, le toit de ces caravanes pliantes est trop lourd pour pouvoir être manoeuvré par une seule personne, ou même deux personnes directement manuellement.

Le brevet français No 2 509 674 décrit ainsi une caravane rigide pliante dont les deux panneaux supérieurs latéraux sont montés pivotants sur la caisse inférieure et dont les deux panneaux avant et arrière sont coulissants dans la caisse et le toit. Des éléments d'aménagement peuvent être prévus dans le toit qui est très volumineux, car les manoeuvres sont effectuées grâce à des câbles actionnés par des treuils. De même, le brevet français No 2 049 376 décrit une caravane pliante comportant un châssis sur lequel quatre panneaux sont montés pivotants. La montée et la descente du toit, qui ne sont pas associées aux panneaux, sont obtenues grâce à un dispositif à treuils, câbles et chandelles escamotables.

Il s'est avéré, dans la pratique, que ces modes de pliage alourdissent considérablement la structure de la caravane, en augmentant le prix de revient du fait de leur complexité et en diminuant la fiabilité. En effet, les câbles ou treuils ou autres ayant de gros efforts à transmettre se détériorent rapidement ou se coincent.

Au contraire, le mode de pliage tel que celui utilisé dans l'invention s'est avéré être dans la pratique le plus efficace et celui dont le prix de revient est le plus faible. Dans les manoeuvres de pliage, le toit est incliné par rapport à l'horizontale: ceci explique que, dans toutes le caravanes de l'état de la technique utilisant un tel mode de pliage, on ait cherché à alléger le toit au maximum afin de faciliter les manoeuvres et d'augmenter la stabilité de la caravane à l'état déplié. En effet, les panneaux supportant le toit étant pivotants, la rigidité de la caravane dépliée pose problème. On a pensé que ce manque de rigidité était dû essentiellement au poids du toit, et c'est pourquoi on l'a allégé au maximum. Cependant, cette tendance à l'allègement du toit est limitée par le fait que le toit doit rester rigide et bien d'équerre, puisque c'est lui qui maintient les panneaux supérieurs pivotants dans la partie verticale.

Par ailleurs, du fait que les panneaux supérieurs pivotants doivent pouvoir être rabattus, ces caravanes pliantes connues comportent moins d'éléments d'aménagement intérieur que les caravanes non pliantes ou que les caravanes pliantes utilisant un autre mode de pliage, ce qui les rend moins confortables. Pour pallier cet inconvénient, l'art antérieur a prévu, dans de telles caravanes pliantes, des éléments d'ameublement amovibles que l'on démonte ou des éléments d'ameublement pliants que l'on doit vider de leur contenu avant le pliage de la caravane. En pratique, on constate que les éléments d'ameublement fixes et rigides sont peu nombreux et peu volumineux, ce qui rend ces caravanes pliantes connues à quatre panneaux supérieurs pivotants peu compétitives sur le marché, trop longues à installer ou à plier, et d'aspect intérieur mal fini.

L'invention vise à pallier ces inconvénients et a pour objet une caravane rigide pliante, du type à quatre panneaux supérieurs associés pivotants sur quatre panneaux inférieurs formant caisse, le toit étant associé en permanence à deux panneaux supérieurs opposés, dont les manoeuvres de pliage et dépliage peuvent être effectuées facilement par un seule personne, dont la rigidité à l'état déplié, tant pour la résistance au vrillage du rectangle que constitue la périphérie du toit que pour la résistance à l'affaissement de la zone centrale dudit toit, est supérieur à celle des caravanes de l'art antérieur à même mode de pliage, qui comporte des espaces de rangement permanents plus importants que dans l'art antérieur et dont le prix de revient reste équivalent, voire devienne inférieur, à celui des caravanes mentionnées de l'art antérieur.

Un autre objet de l'invention est de proposer une telle caravane rigide pliante dont l'aspect et le confort intérieur soient équivalents à ceux d'une caravane non pliante.

Pour ce faire, une telle caravane selon l'invention comporte des éléments d'aménagement rigides et indéformables associés rigidement de façon inamovible au toit, lesdits éléments étant définis par une paroi inférieure associée aux flancs dudit toit, sensiblement perpendiculairement au flanc respectif, pour constituer un cadre intérieur périphérique rigide, et au moins en partie par des parois associées au plafond et disposées entre la paroi inférieur et le plafond, sensiblement perpendiculairement à ladite paroi inférieure, pour constituer des étais rigides maintenant le cintrage du toit bombé.

Les inventeurs ont, en effet, constaté avec surprise que le fait de prévoir des éléments d'aménagement dans le toit — contrairement au préjugé de l'homme du métier qui pensait que cela diminuait la stabilité à l'état déplié et rend les manoeuvres plus difficiles — permet d'améliorer considérablement la rigidité de la caravane à l'état déplié sans augmenter notablement la difficulté des manoeuvres de pliage et de dépliage, et en augmentant la rapidité des opérations de pliage et de montage.

De plus, ces éléments d'aménagement offrent des espaces de rangement importants et permanents. Il n'est pas nécessaire de les vider ou de les démonter pour plier la caravane. De plus, ils sont peu coûteux et faciles à fabriquer. Ils offrent donc toutes les qualités des éléments d'ameublement des caravanes non pliantes et font que le caravane, selon l'invention, a tous les avantages des caravanes non-pliantes, sans en avoir les inconvénients. En particulier, l'aménagement intérieur est plus complet que dans les caravanes connues, et l'aspect intérieur et le confort sont équivalents à ceux d'une caravane non-pliante.

Ainsi le toit d'une caravane selon l'invention peut être allégé, par exemple par réduction de son épaisseur, sans pour autant perdre les qualités de rigidité et d'équerrage. La caravane selon l'invention a une stabilité à l'état déplié supérieure à celle des caravanes à même mode de pliage de l'art antérieure ainsi qu'un volume de rangement plus important.

D'autres caractéristiques et avantages de l'invention apparaîtront à la lecture de la description suivante d'un mode de réalisation de l'invention faite en référence aux figures annexées dans lesquelles;

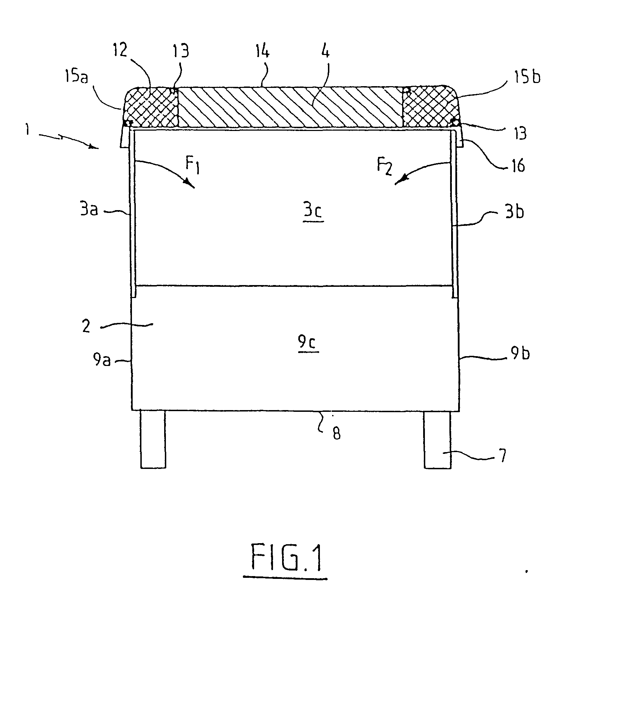

— la figure 1 est une vue schèmatique en coupe selon la largeur d'une caravane selon l'invention à l'état déplié;

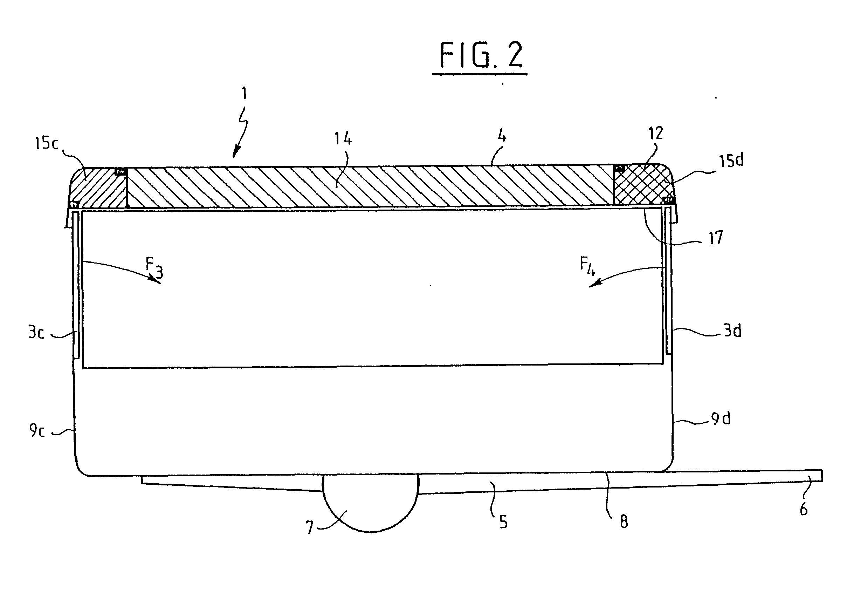

— la figure 2 est une vue schématique en coupe selon la longueur d'une caravane selon l'invention à l'état déplié;

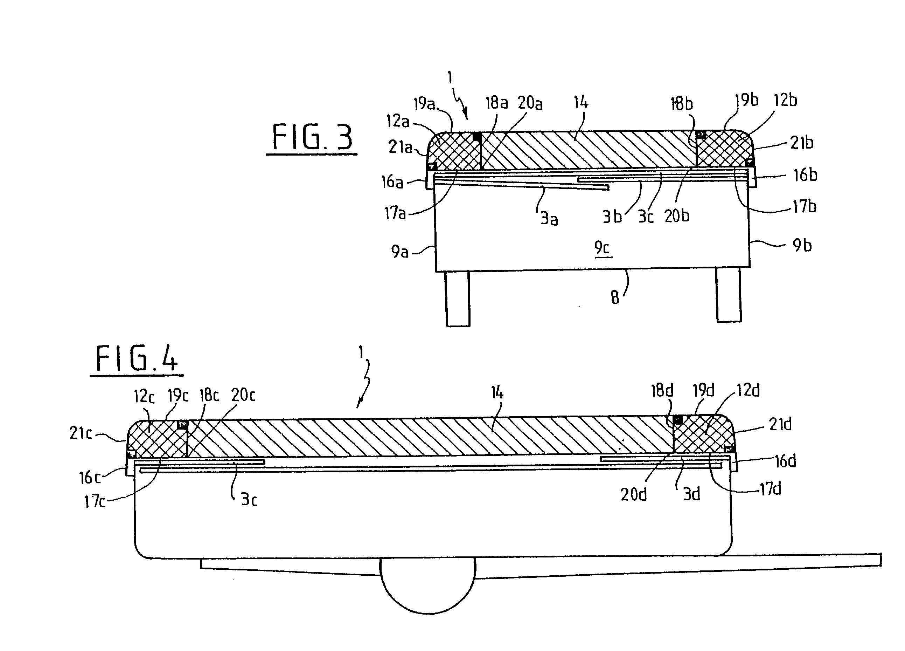

— la figure 3 est une vue schématique en coupe selon la largeur d'une caravane selon l'invention à l'état plié;
— la figure 4 est une vue schématique en coupe selon la longueur d'une caravane selon l'invention à l'état plié;
— la figure 5 est une vue schématique en coupe selon la longueur d'une caravane selon l'invention dans un état intermédiaire.

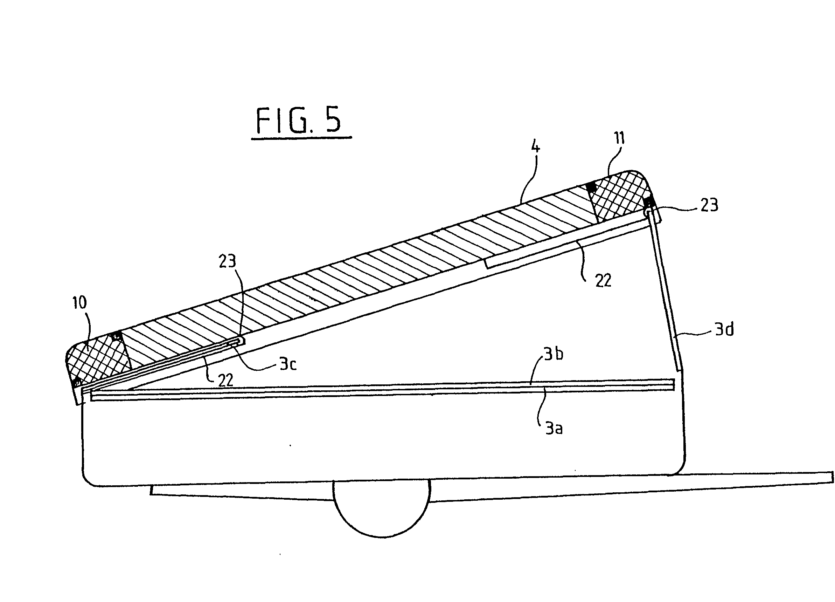

Dans un mode de réalisation préférentiel de l'invention, une caravane 1 du type rigide pliante comporte de façon connue en soi une caisse 2 inférieure, quatre panneaux supérieurs 3a, 3b, 3c, 3d et un toit 4. La caisse 2 est associée à un chassis 5 comportant notamment des moyens de remorquage 6 et des roues 7. La caisse 2 est constituée d'un plancher 8 sensiblement horizontal et rectangulaire et de quatre panneaux 9a, 9b, 9c, 9d inférieurs, de préférence verticaux, associés rigidement au plancher 8 de sorte que la caisse 2 a sensiblement la forme d'un parallélépipède rectangle sans face supérieure. Les quatre panneaux supérieurs 3a, 3b, 3c, 3d sont montés à pivotement sur les panneaux inférieurs qui ont ainsi un côté en commun avec les panneaux supérieurs 3a, 3b, 3c, 3d. Lorsque la caravane est à l'état déplié, les panneaux supérieurs 3a, 3b, 3c, 3d sont préférentiellement sensiblement verticaux dans le prolongement des panneaux inférieurs et supportent le toit 4 de la caravane. Lorsque la caravane est l'état plié, les panneaux supérieurs 3a, 3b, 3c, 3d sont préférentiellement sensiblement horizontaux rabattus vers l'intérieur de la caravane 1 en formant sensiblement un angle droit avec les panneaux supérieurs 3a, 3b, 3c, 3d et le toit repose sur ces panneaux supérieurs et/ou sur les panneaux inférieurs 9a, 9b, 9c, 9d. Le toit 4 est associé de préférence aux panneaux supérieurs avant 3d et arrière 3c. Ainsi, lors du pliage de la caravane 1, on rabat vers l'intérieur les panneaux supérieurs latéraux 3a, 3b selon les flèches F1 et F2. Puis, on rabat le panneaux supérieur arrière 3c selon la flèche F3 vers l'intérieur, ce qui a pour effet d'incliner le toit 4 comme représenté en figure 5 en abaissant sa partie arrière 10. Enfin, on rabat le panneau supérieur avant 3d vers l'intérieur, selon la flèche F4, ce qui a pour effet d'abaisser la partie avant 11 et le toit en entier, la caravane étant alors à l'état plié.

Des moyens d'assistance aux manoeuvres, tels que des barres de torsion, des vérins ou autres, peuvent être prévus de la même façon que dans l'art antérieur.

Une caravane 1 de type rigide pliante selon l'invention comporte des éléments 12 d'aménagement intérieur associés au toit 4. Ces éléments 12 d'aménagement intérieur sont associés rigidement, et de façon inamovible, au toit 4 par des moyens 13 d'association rigide, inamovible, les rendant solidaires du toit 4. Ces moyens 13 d'association peuvent être constitués de tasseaux, de longerons, d'équerres, d'articulations, de charnières, de vis, rivets, colle, soudure ou autres moyens d'association rigide inamovible connus et appropriés. Ainsi, les éléments 12 d'aménagement intérieur sont solidaires du toit 4, que la caravane 1 soit à l'état plié, à l'état déplié, ou dans un état intermédiaire.

Les éléments 12 d'aménagement intérieur associés au toit 4 sont de préférence rigides et indéformables, de sorte qu'ils ont un volume intérieur constant et indépendant de l'état dans lequel se trouve la caravane 1. Les éléments 12 d'aménagement intérieur sont donc des éléments d'aménagement permanents qu'il n'est pas nécessaire de vider avant le pliage de la caravane 1. De plus, lorsque la caravane est à l'état plié, les éléments 12 d'aménagement intérieur sont placés à l'extérieur de la caisse inférieure 2, entre les panneaux supérieurs 3 et le plafond 14 du toit 4. Ainsi, les éléments 12 d'aménagement intérieur associés au toit 4 ne pertubent pas le pliage ou le dépliage des autres éléments d'aménagement situés dans la caisse 2. Le toit 4 d'une caravane 1 selon l'invention est avantageusement constitué d'une caisse ouverte à sa face inférieure comportant un plafond 14 et quatre flancs 15a, 15b, 15c, 15d s'étendant vers le bas. Chacun de ces flancs 15 est prolongé vers le bas d'un rebord 16, sensiblement plan, associé au flanc 15 en étant légèrement décalé vers l'extérieur. Ces rebords 16 recouvrent sur l'extérieur la partie supérieure des panneaux supérieurs 3, respectivement de la caisse 2 inférieure lorsque la caravane est dépliée, respectivement pliée. Des moyens d'étanchéité, par exemple un joint élastique, sont avantageusement prévus sur la face interne du rebord 16, de préférence à sa partie supérieure, et coopèrent avec les panneaux supérieurs 3 et la caisse 2 inférieure, selon l'état de la caravanne 1. Le plafond 14 et/ou les flancs 15 et/ou le record 16 peuvent être doublés ou habillés de façon appropriée. Par exemple, la caisse formant le toit 4 est réalisée d'une coque en matière plastique moulée ou en matériau composite doublée de parois internes de finition, en contreplaqué. Entre la coque et le contreplaqué, on peut prévoir d'insérer des matières isolantes (laine de verre, polystyrène, ...). La caisse formant le toit 4 est rigidifiée et équerrée par les éléments 12 d'aménagement. L'épaisseur de cette caisse peut être ainsi plus faible que celle rencontrée dans l'art antérieur.

Une caravane 1 selon l'invention comporte de préférence des éléments 12 d'aménagement associés au toit 4 à proximité de tout ou partie de sa périphérie à l'intérieur de la caravane 1 comme cela est représenté sur les figures. Ils sont ainsi à la fois faciles d'accès, volumineux et de fabrication aisée et peu couteuse.

Dans ce mode de réalisation préférentiel, les panneaux supérieurs 3 de la caravane 1 à l'état déplié sont situés sous les éléments 12 d'aménagement. Ainsi la hauteur de ces panneaux supérieurs 3 est réduite par rapport à ceux de l'art antérieur qui montaient jusqu'au plafond 14. Cela est particulièrement avantageux lors des manoeuvres de ces panneaux supérieurs 3, notamment les panneaux latéraux 3a, 3b qui se font plus facilement du fait que ces panneaux sont plus légers. On remarquera que cette diminution de hauteur des panneaux 3 affectant leur partie supérieure opposée à leur articulation sur la caisse 2, le gain de poids est d'autant plus sensible pour l'utilisateur lors du pliage et du dépliage.

Cependant, une caravane selon l'invention peut comporter aussi des éléments 12 d'aménagement associés au toit à proximité du centre du toit. Par exemple, un élément 12 d'aménagement constitué de moyens de conditionnement d'air, et/ou de chauffage et/ou d'aération peut être prévu au centre du toit 4. Dans tous les cas, des moyens d'éclairage connus, tels que des abat-jour suspendus pourront être prévus associés au toit 4. Ces moyens d'éclairage ne sont pas considérés dans le cadre de la présente invention comme étant des éléments 12 d'aménagement intérieur.

Le éléments 12 d'aménagement sont associés à au moins un des flancs 15 et/ou au plafond 14 à l'intérieur de l'espace délimité par la caisse formant le toit 4. Dans le cas où les éléments 12 d'aménagement intérieur sont associés aux flancs 15, les rebords 16 prolongent les flancs 15 en dessous des éléments 12 d'aménagement.

De préférence, des éléments 12 d'aménagement sont associés aux quatre flancs 15 et au plafond 14. De préférence les éléments 12 d'aménagement sont constitués au moins en partie par la caisse formant le toit 4.

Plus précisément, les éléments 12 d'aménagement intérieur associés au toit 4 sont constitués d'une part par tout ou partie d'au moins un des flancs 15 et/ou du plafond 14, et d'autre part de parois 17, 18, qui sont associées au(x) flanc(s) 15 et/ou au plafond 14 et qui s'étendent vers l'intérieur de la caravane 1. La paroi inférieure 17 associée aux flancs du toit 4, sensiblement perpendiculairement au flanc respectif, constitue ainsi un cadre intérieur périphérique rigide; en outre, les parois 18 associées au plafond 14 disposées entre la paroi inférieure 17 et le plafond 14, sensiblement perpendiculairement à ladite paroi inférieure, constituent des étais rigides maintenant le cintrage du toit bombé 4; ceci explique pourquoi la structure et la dispoition des éléments d'aménagement 12 améliorent considérablement la rigidité du toit lorsqu'il est à l'état déplié, tant pour sa résistance au vrillage que pour sa résistance à l'affaissement.

Selon la mode de réalisation préférentiel représenté, la caravane 1 comporte des éléments 12a, 12b, 12c, 12d d'aménagement intérieur associés au toit 4 respectivement le long de chacun des quatre flancs 15a, 15b, 15c, 15d. Ces éléments 12 d'aménagement sont alors constitués d'une paroi inférieure 17a, 17b, 17c, 17d associée sensiblement perpendiculairement au flanc respectif 15a, 15b, 15c, 15d, de la partie 21a, 21b, 21c, 21d, du flanc 15a, 15b, 15c, 15d, comprise entre cette paroi inférieure 17a, 17b, 17c, 17d et le plafond 14, de la partie 19a, 19b, 19c, 19d de plafond en regard de la paroi inférieure 17a, 17b, 17c, 17d et d'une paroi d'accès 18a, 18b, 18c, 18d entre le bord intérieur 20a, 20b, 20c, 20d de la paroi inférieure 17a, 17b, 17c, 17d et la plafond 14. Ainsi deux des parois de chaque élément 12 d'aménagement sont réalisées par le plafond 14 et un flanc 15.

Selon le type d'élément 12a, 12b, 12c, 12d d'aménagement voulu, la paroi d'accès 18a, 18b, 18c, 18d comporte de façon appropriée ses portes battantes ou coulissantes, une vitrine, un rebord, etc. En particulier, la paroi d'accès 18a, 18b, 18c, 18d comporte avantageusement au moins une porte battante de façon à réaliser un élément de rangement du type placard. Cette porte battante peut être articulée à proximité du plafond 14, voire directement au plafond 14, et ferme par exemple grâce à des moyens de fermeture à aimant. Ainsi réalisé, l'élément 12 d'aménagement ouvrant par le bas de sa paroi d'accès 18a, 18b, 18c, 18d est d'accès facile lorsque la caravane 1 est à l'état déplié. La porte battante peut cependant être articulée par un de ses côtés verticaux, par son côté inférieur, ou de toute autre façon connue et appropriée.

En variante ou en combinaison avec la variante précédente, la paroi d'accès 18a, 18b, 18c, 18d comporte une porte coulissant dans les glissières solidaires du plafond 14 et de la paroi 17a, 17b, 17c, 17d inférieure.

Selon une autre variante, ou en combinaison avec les variantes précédentes, la paroi d'accès 18a, 18b, 18c, 18d comporte, sur une partie de sa longeur, un rebord vertical s'étendant vers le haut le long du bord intérieur 20a, 20b, 20c, 20d de la paroi inférieur 17a, 17b, 17c, 17d sur une faible hauteur, l'espace compris entre ce rebord et la plafond 14 étant laissé vide de façon à réaliser un élément de rangement du type étagère ou rayonnage. Un élément 12 d'aménagement peut donc être constitué d'éléments de rangement de divers types (placard, vitrine, rayonnage, étagère, supports, . . .) intercalés sur la longeur de l'élément 12 de façon appropriée. Comme déjà dit, au moins une partie d'un élément 12 d'aménagement associé au toit 4 peut être constituée de moyens de conditionnement d'air, et/ou de chauffage, et/ou d'aération. Les éléments 12 d'aménagement peuvent prendre en variante toute forme possible et être de tous types connus, selon les besoins. Avantageusement, la paroi inférieure 17a, 17b, 17c, 17d est associée à la partie basse du flanc 15a, 15b, 15c, 15d. Dans ce cas, les éléments 12 d'aménagement comportent avantageusement, notamment sur la face externe de leurs parois inférieures 17, des moyens d'association d'autres éléments d'aménagement de la caravane 1.

Par exemple, des tringles à rideaux et/ou des cantonnières sont associées aux parois inférieures 17 en regard des fenêtres de la caravane.

Egalement, la penderie de la caravane 1 et/ou tout autre élément d'aménagement intérieur de la caravane est associé, par exemple, suspendu, à la paroi 17 inférieure d'un élément 12 d'aménagement, associé au toit 4.

De même les parois inférieures 17a, 17b, 17c, 17d des éléments 12 d'aménagement comportent avantageusement, associés à leur face externe, des moyens de maintien temporaire, non représentés, des panneaux supérieurs 3a, 3b, 3c, 3d dont la fonction est de maintenir en place les panneaux supérieurs 3a, 3b, 3c, 3d lorsque la caravane 1 est à l'état déplié, pour éviter son pliage intempestif. Ces moyens de maintien sont, par exemple, des dispositifs de clippage, des dispositifs à goupilles, ou autres. Les parois inférieures 17a, 17b, 17c, 17d sont également avantageusement renforcées en regard de leur surface de contact avec les panneaux supérieurs 3 ou inférieurs 9.

Dans cette dernière forme de réalisation préférentielle, le toit 4 comporte des rebords 16a, 16b, 16c, 16d d'étanchéité prolongeant les flancs 15a, 15b, 15c, 15d vers le bas à partir des parois inférieures 17a, 17b, 17c, 17d et recouvrant sur l'extérieur la partie supérieure des panneaux supérieurs 3a, 3b, 3c, 3d. Les deux rebords 16a, 16b latéraux comportent (figure 5) sur leur face interne des rails de guidage 22 coopérant avec des roulements ou patins 23 associés aux coins supérieurs 24 des panneaux supérieurs avant 3d et arrière 3c. Les rails de guidage 22 et les roulements ou patins 23 constituent des moyens de support du toit 4, quel que soit 1'état de la caravane 2 et des moyens d'association du toit 4 aux panneaux supérieurs avant 3d et arrière 3c. Le toit 4 peut cependant être associé en variante aux panneaux supérieurs latéraux 3a et 3b. Dans ce cas, les rails de guidage 22 seront solidaires des rebords avant et arrière 16d, 16c. Ces rails de guidage 22 sont associés à l'avant et à l'arrière des rebords 16a et 16b, rigidement, sensiblement parallèlement à la direction longitudinale des rebords 16a, 16b ou légèrement inclinés par rapport à cette direction, de façon à assurer un pliage correct des panneaux supérieurs avant 3d et arrière 3c de la caravane 1. La forme de ces rails de guidage 22 est indifférente et adaptée de façon connue pour permettre des manoeuvres aisées et efficaces lors du pliage et du dépliage. Les panneaux supérieurs avant 3d et arrière 3c comportent avantageusement des cornières latérales non représentées le long de leurs bords latéraux, dont une face est associée rigidement à ces panneaux supérieurs 3d, 3c et dont l'autre face s'étend perpendiculairement à ces panneaux 3d, 3c vers l'intérieur de la caravane. Ces cornières assurent une fermeture correcte lors du pliage de la caravane 1 et supportent avantageusement à leur extrêmité libre supérieure les roulements 23.

Les éléments 12 d'aménagement, ainsi que l'ensemble du toit 4, sont avantageusement et de préférence réalisés en matière synthétique, rigide, légère, par exemple du polyester ou équivalent. Dans ce cas, la caisse 2 formant toit 4, y compris ses éléments d'aménagement 12 pourra être réalisée monobloc d'un seul tenant. Cette disposition augmente encore d'autant la rigidité et l'équerrage du toit 4 et dispense de moyens d'association 13 spécifiques des éléments 12 d'aménagement au toit 4.

**Revendications**

1. Caravane de type rigide pliante comportant une caisse inférieure (2) constituée d'un plancher (8) sensiblement horizontal et rectangulaire et de quatre panneaux (9a, 9b, 9c, 9d) inférieurs verticaux associés rigidement au plancher (8), quatre panneaux (3a, 3b, 3c, 3d) supérieurs montés à pivotement sur les panneaux inférieurs et un toit (4) recouvrant la caravane et constitué d'une caisse supérieure ouverte à sa face inférieure comportant un plafond (14) et quatre flancs (15a, 15b, 15c, 15d) s'étendant vers le bas, ledit toit étant en outre associé en permanence à deux panneaux supérieurs opposés (3d, 3c ou 3a, 3b), notamment par des rails de guidage (22) solidaires du toit (4) et coopérant avec des roulements ou patins (23) associés aux coins supérieurs desdits panneaux supérieurs (3d, 3c ou 3b), caractérisée en ce qu'elle comporte des éléments (12) d'aménagement rigides et indéformables associés rigidement et de façon inamovible au toit (4), lesdits éléments étant définis par une paroi inférieure (17) associée aux flancs dudit toit, sensiblement perpendiculairement au flanc respectif, pour constituer un cadre intérieur périphérique rigide, et au moins en partie par des parois (18) associées au plafond (14) et disposées entre la paroi inférieure (17) et le plafond (14), sensiblement perpendiculairement à ladite paroi inférieure, pour constituer des étais rigides maintenant le cintrage du toit (4).

2. Caravane selon la revendication 1, caractérisée en ce qu'elle comporte des éléments (12a, 12b, 12c, 12d) d'aménagement intérieur associés au toit (4) respectivement le long de chacun des quatre flancs (15a, 15b, 15c, 15d), chaque élément étant constitué d'une paroi inférieure (17a, 17b, 17c, 17d) associée sensiblement perpendiculairement au flanc respectif (15a, 15b, 15c, 15d), de la partie (21a, 21b, 21c, 21d) du flanc (15a, 15b, 15c, 15d) comprise entre cette paroi inférieure (17a, 17b, 17c, 17d) et le plafond (14), de la partie (19a, 19b, 19c, 19d) de plafond en regard de la paroi inférieure (17a, 17b, 17c, 17d) et d'une paroi d'accès (18a, 18b, 18c, 18d) entre le rebord intérieur (20a, 20b, 20c, 20d) de la paroi inférieure (17a, 17b, 17c, 17d) et le plafond (14).

3. Caravane selon la revendication 2, caractérisée en ce qu'elle comporte des éléments (12a, 12b, 12c, 12d) d'aménagement intérieur dont la paroi d'accès (18a, 18b, 18c, 18d) présente une porte battante sur une partie de sa longueur, de façon à réaliser un élément de rangement du type placard.

4. Caravane selon l'une des revendications 2 et 3, caractérisée en ce qu'elle comporte des éléments (12a, 12b, 12c, 12d) d'aménagement intérieur dont la paroi d'accès (18a, 18b, 18c, 18d) présente sur une partie de sa longueur une porte coulissant dans des glissières solidaires du plafond (14) et de la paroi inférieure (17a, 17b, 17c, 17d).

5. Caravane selon l'une des revendications 2 à 4, caractérisée en ce qu'elle comporte des éléments (12a, 12b, 12c, 12d) d'aménagement intérieur dont la paroi d'accès (18a, 18b, 18c, 18d) présente sur une partie de sa longueur un rebord vertical s'étendant vers le haut le long du bord intérieur (20a, 20b, 20c, 20d) de la paroi inférieure (17a, 17b, 17c, 17d) sur une faible hauteur, l'espace compris entre ce rebord et le plafond (14) étant laissé vide, de façon à réaliser un élément de rangement du type étagère ou rayonnage.

6. Caravane selon l'une des revendications 1 à 5, caractérisée en ce que les parois inférieures (17a, 17b, 17c, 17d) des éléments (12) d'aménagement comportant, associés à leur face externe, des moyens de maintien temporaire dont la fonction est de maintenir en place les panneaux supérieurs (3a, 3b, 3c, 3d) lorsque la caravane est à l'état déplié, pour éviter son pliage intempestif.

7. Caravane selon l'une des revendications 1 à 6, caractérisée en ce que la caisse formant le toit bombé (4), y compris ses éléments (12) d'aménagement, est réalisée monobloc d'un seul tenant.

**Patentansprüche**

1. Zusammenlegbarer starrer Wohnwagen, mit einer Unterkarosse (2) aus einem genau waagerecht liegendem rechteckigen Boden (8) und vier unteren Wandteilen (9a, 9b, 9c, 9d), die vertikal fest mit dem Boden (8) verbunden sind, vier auf den unteren Wandteilen schwenkbar und an einem den Wohnwagen abdeckenden Dach (4) angebrachten oberen Wandteilen (3a, 3b, 3c, 3d), wobei das Dach aus einer zu seiner Innenseite hin geöffneten Oberkarosse besteht, die eine Decke (14) und vier sich nach unten erstreckende Seitenflanken (15a, 15b, 15c, 15d) aufweist, wobei das Dach außerdem dauerhaft mit zwei einander gegenüberliegenden Wandteilen (3d, 3c oder 3a, 3b) verbunden ist, insbesondere durch einstückig mit dem Dach (4) ausgebildete und mit den oberen Ecken der oberen Wandteile (3a, 3b, 3c, 3d) zugeordneten Rollen oder Kufen (23) zusammenwirkende Spurlatten (22), dadurch gekennzeichnet, daß er feste und nicht deformierbare Inneneinbauelemente (12) aufweist, die fest und unlösbar mit dem Dach (4) verbunden sind, wobei die Elemente durch eine mit den Seitenflanken des Daches verbundene untere Wand (17), die genau senkrecht zur jeweiligen Flanke ist und einen festen inneren Peripherierahmen bildet, und wenigstens teilweise durch mit der Decke (14) verbundene und zwischen der unteren Wand (17) und der Decke (14), genau senkrecht zur unteren Wand, angeordnete Wände (18), die feste, die Wölbung des Daches (4) haltende Stützen bilden, definiert sind.

2. Wohnwagen nach Anspruch 1, dadurch gekennzeichnet, daß er mit dem Dach (4) beziehungsweise längs jeder der vier Seitenflanken (15a, 15b, 15c, 15d) verbundenen Inneneinbaußelemente (12a, 12b, 12c, 12d) aufweist, wobei jedes Element aus einer unteren Wand (17a, 17b, 17c, 17d), die genau senkrecht zu der entsprechenden Seitenflanke (15a, 15b, 15c, 15d) ist, dem Teil (21a, 21b, 21c, 21d) der Seitenflanke (15a, 15b, 15c, 15d) zwischen der unteren Wand (17a, 17b, 17c, 17d) und der Decke (14), dem Deckenteil (19a, 19b, 19c, 19d) gegenüber der unteren Wand (17a, 17b, 17c, 17d) und einer Zugangswand (18a, 18b, 18c, 18d) zwischen der inneren Wandleiste (20a, 20b, 20c, 20d) der unteren Wand (17a, 17b, 17c, 17d) und der Decke (14) besteht.

3. Wohnwagen nach Anspruch 2, dadurch gekennzeichnet, daß er Inneneinbauelemente (12a, 12b, 12c, 12d) aufweist, deren Zugangswand (18a, 18b, 18c, 18d) auf einem Teil ihrer Länge eine Pendeltür ist und ein Ordnungselement vom Typ eines Wandschrankes bildet.

4. Wohnwagen nach Anspruch 2 oder 3, dadurch gekennzeichnet, daß er Inneneinbauelemente (12a, 12b, 12c, 12d) aufweist, deren Zugangswand (18a, 18b, 18c, 18d) auf einem Teil ihrer Länge eine Schiebetür ist, die in einstückig mit der Decke (14) und der unteren Wand (17a, 17b, 17c, 17d) ausgebildeten Gleitschienen läuft.

5. Wohnwagen nach einem der Ansprüche 2 bis 4, dadurch gekennzeichnet, daß er Inneneinbauelemente (12a, 12b, 12c, 12d) aufweist, deren Zugangswand (18a, 18b, 18c, 18d) eine senkrechte Randleiste bildet, die sich nach oben über die Länge der Innenleiste (20a, 20b, 20c, 20d) der unteren Wand (17a, 17b, 17c, 17d) schwach erhöht erstreckt, wobei zwischen dieser Leiste und der Decke (14) ein freier Raum bleibt, so daß ein Ordnungselement von Typ Etagengestell oder Regal ausgebildet ist.

6. Wohnwagen nach einem der Ansprüche 1 bis 5, dadurch gekennzeichnet, daß die unteren Wände (17a, 17b, 17c, 17d) der Inneneinbauelemente (12) an ihrer äußeren Fläche Elemente zum zeitweiligen Fixieren aufweisen, die die oberen Wandteile (3a, 3b, 3c, 3d) in aufgebautem Zustand des Wohnwagens an ihrem Platz halten und ein unerwünschtes Zusammenlegen verhindern.

7. Wohnwagen nach einem der Ansprüche 1 bis 6, dadurch gekennzeichnet, daß ein das gewölbte Dach (4) einschließlich der Inneneinbauelemente (12) bildendes Karosserieteil aus einem Block einstückig gebildet ist.

**Claims**

1. Caravan of the folding, rigid type, comprising a lower body (2) constituted by a substantially horizontal and rectangular floor (8) and four lower, vertical panels (9a, 9b, 9c, 9d) connected rigidly to the floor (8), four upper panels (3a, 3b, 3c, 3d) pivotally mounted on the lower panels and a roof (4) covering the caravan and constituted by an upper body open on its lower side comprising ceiling (14) and four sides (15a, 15b, 15c, 15d) extending downwards, the said roof also being connected permanently to two opposing upper panels (3d, 3c or 3a, 3b), in particular by guide rails (22) integral with the roof (4) and co-operating with rollers or runners (23) associated with the upper corners of the said upper panels (3d, 3c or 3a, 3b), characterised in that it comprises rigid and non-deformable fitting elements (12) connected rigidly and in a non-removable manner to the roof (4), the said elements being defined by a lower wall (17) associated with the sides of said roof, substantially perpendicularly to the respective side, in order to constitute a rigid, peripheral, inner frame and at least partly by walls (18) associated with the ceiling (14) and disposed between the lower wall (17) and the ceiling (14), substantially perpendicularly to said lower wall, in order to constitute rigid stays maintaining the curvature of the roof (4).

2. Caravan according to Claim 1, characterised in that it comprises internal fitting elements (12a, 12b, 12c, 12d) connected to the roof (4) respectively along each of the four sides (15a, 15b, 15c, 15d), each element being constituted by a lower wall (17a, 17b, 17c, 17d) connected substantially perpendicularly to the respective side (15a, 15b, 15c, 15d), by the part (21a, 21b, 21c, 21d) of the side (15a, 15b, 15c, 15d) comprised between this lower wall (17a, 17b, 17c, 17d) and the ceiling (14), by the part (19a, 19b, 19c, 19d) of the ceiling opposite the lower wall (17a, 17b, 17c, 17d) and by an access wall (18a, 18b, 18c, 18d) between the inner edge (20a, 20b, 20c, 20d) of the lower wall (17a, 17b, 17c, 17d) and the ceiling (14).

3. Caravan according to Claim 2, characterised in that it comprises internal fitting elements (12a, 12b, 12c, 12d) whereof the access wall (18a, 18b, 18c, 18d) comprises a folding door over part of its length, in order to provide a storage element of the wall-cupboard type.

4. Caravan according to one of Claims 2 and 3, characterised in that it comprises internal fitting elements (12a, 12b, 12c, 12d) whereof the access wall (18a, 18b, 18c, 18d) comprises over part of its length a door sliding in runners integral with the ceiling (14) and the lower wall (17a, 17b, 17c, 17d).

5. Caravan according to one of Claims 2 to 4, characterised in that it comprises internal fitting elements (12a, 12b, 12c, 12d) whereof the access wall (18a, 18b, 18c, 18d) comprises over part of its length a vertical rim extending upwards along the inner edge (20a, 20b, 20c, 20d) of the lower wall (17a, 17b, 17c, 17d) over a small height, the space comprised between this rim and the ceiling (14) being left empty, in order to provide a storage element of the shelf type.

6. Caravan according to one of Claims 1 to 5, characterised in that the lower walls (17a, 17b, 17c, 17d) of the fitting elements (12) comprise, connected to their outer side, temporary retaining means whereof the function is to keep the upper panels (3a, 3b, 3c, 3d) in position when the caravan is unfolded, in order to prevent its inopportune folding.

7. Caravan according to one of Claims 1 to 6, characterised in that the body forming the curved roof (4), including its fitting elements (12), is made all in one piece.

FIG.1

FIG. 2

EP 0 206 902 B1

## FIG. 3

## FIG. 4

FIG. 5

EP 0 206 902 B1